# EUROPEAN PATENT APPLICATION

(11) **EP 1 320 261 A1**
(43) Date of publication of application: **18.06.2003**
(21) Application number: 01310394.0
(22) Date of filing: 12.12.2001
(51) Int. Cl.: H04N 7/15

(54) **Videoconference system**

(71) Applicant: Leadtek Research Inc., Chung-Ho, Taipei Hsien (TW)
(72) Inventor: Liu, Meng-Hsien, Taoyuan (TW)
(74) Representative: Molyneaux, Martyn William

(57) **Abstract**

The present invention provides a videoconference system, suitable for a plurality of participant units join the conference. The videoconference system comprises a central control unit, a video decoding unit and a video encoding unit. Wherein, the central control unit receives the individual video data streams of a plurality of participant units, and selectively outputs the video data streams of part of all participant units. The video decoding unit receives the individual video data streams that are chosen, disassembles the audio signal and the video signal of the individual video data stream, and then mixes the disassembled audio signals and the disassembled video signals into an audio mixed signal and a video mixed signal respectively. The video encoding unit receives the audio mixed signal and the video mixed signal, encodes the audio mixed signal and the video mixed signal to a video mixed data stream, and then sends the video mixed data stream to the participant units.

## Description

### BACKGROUND OF THE INVENTION

### Field of Invention

The present invention generally relates to a videoconference system, and more particularly, relates to the process and control of the video data stream of the videoconference system.

### Description of Related Art

The change of the science and technology of the modern communication, shorten distances of the space greatly. Which makes the message exchange within people is no longer limited to the distance between locations. People has a custom to live together. In which, the mutual information exchange is an important part of the life. Conference is a manner to be used to solve the problems that exist in the group jointly.

In the early day, due to the unpopularity of the communication, the conference can only be held in a situation that all the participants of the conference go to the predetermined location personally. When the communication and multi-media information technologies become popular, the voice and the video of the participants can be transformed to a digital signal then to a data stream by an electronic equipment, then through the network technology like the local area network (LAN) to transmit and receive the data stream. The each other's video data streams that include the audio and the video are displayed simultaneously on the participant's display system such as the personal computer system. During this period, the transmission and the control of the data is processed by an unified protocol. Thus, the modern videoconference is not limited by the distance of the locations.

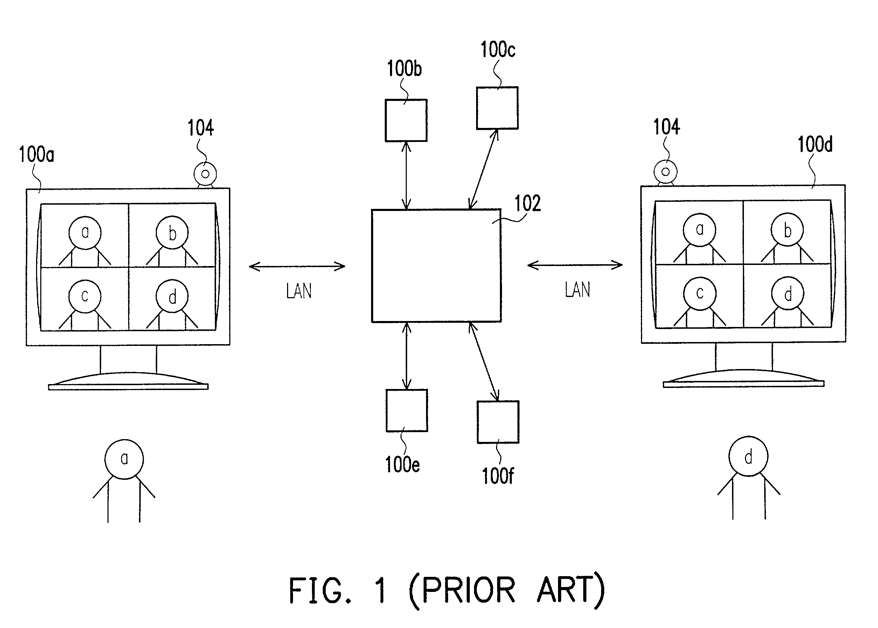

The simple operation of the videoconference is shown in FIG. 1. In FIG. 1, there is a broadcast system, such as a computer system 100a, in the side of user a. The computer system 100a also equips with a video catch device 104 to catch the video and the audio of the user a. Similarly, there is also a computer system 100d in the side of user d, which equips with a video catch device 104. Thus, each user has corresponding broadcast system 100a, 100b, ..., and 100f. These users use the same video transmission protocol to send the video data stream to a control unit 102 via the local area network LAN. The individual video data stream is mixed to a mixed video data stream that is subsequently sent to the user of each side for broadcasting. Generally, the control unit 102 is controlled by the chairman of the conference, under the number that is allowed by the equipment, for example, the video of the user a, b, c and d are selected to mix, and the mixed video is sent to all users, such as user a, b, ..., f. The computer 100a of the user a displays the video of four users. Similarly, the computer 100d of the user d also displays the video of the same four users. Wherein, the display may or may not include its own video. All other users also display the video of user a, b, c and d.

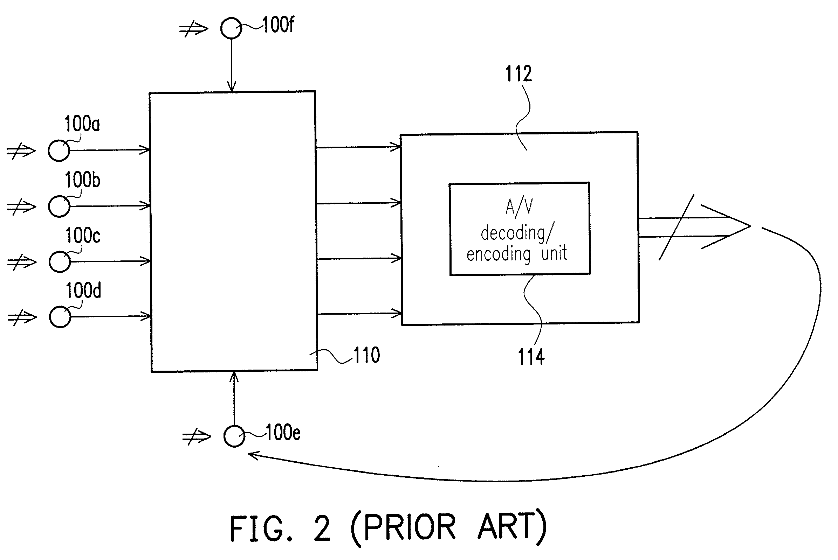

In order to carry on the videoconference by using the videoconference system as shown in FIG. 1, the physical conventional system is shown in FIG. 2. A plurality of user units that are attending the conference, such as 100a, 100b, ..., and 100f, input the individual video data stream to a data stream control center 110 respectively. The data stream control center 110 is controlled by the chairman of the conference. Since the data process of the video data costs a large amount of the computing power of the central processor unit (CPU) and the processing capability of the other related elements. Thus, the load is limited. Generally, only four video data streams are chosen to display in real time.

The four video data streams that are chosen are input into a multi-point control unit (MCU) 112. Wherein, the multi-point control unit 112 includes a decoding encoding process unit 114 of an audio/video (A/V). The individual video data stream that is input is decoded into the audio signal and the video signal. After that, the individual audio signal and the individual video signal are mixed and encoded into another mixed video data stream. The mixed video data stream is subsequently sent to each unit 100a, 100b, and 100f to broadcast.

In the videoconference system mentioned above, all the decoding and encoding of the video data stream are processed by a single process unit 104. Since the process of the video needs a large amount of CPU computing to decode and encode the audio data and the video data. Thus, the processor unit 104 carries on a great amount of workload. Because of the limitation of the computing power, the efficiency quality of the conventional videoconference system is not ideal, and the cost of the system equipments cannot be reduced efficiently.

### SUMMARY OF THE INVENTION

In order to solve the problem mentioned above, the present invention provides a videoconference system, suitable for a plurality of participant units join the conference. The videoconference system comprises a central control unit, a video decoding unit and a video encoding unit. Wherein, the central control unit receives the individual video data streams of a plurality of participant units, and selectively outputs the video data streams of part of all participant units. The video decoding unit receives the individual video data streams that are chosen, disassembles the audio signal and the video signal of the individual video data stream, and then mixes the disassembled audio signals and the disassembled video signals into an audio mixed signal and a video mixed signal respectively. The video encoding unit receives the audio mixed signal and the video mixed signal, encodes the audio mixed signal and the video mixed signal to a video mixed data stream, and then sends the video mixed data stream to the participant units.

Since the decoding part and the encoding part of the video are processed via two separate process units. The computing processes of the videoconference system provided by the present invention according to the description above can be separated and processed in an encoding chip and a decoding chip respectively. The individual chip of these two chips does not have to equip the high computing power, thus the circuit design of the chip is much easier compare to the conventional system, and the cost is reduced accompanying too. Therefore, it does not only increase the efficiency of the videoconference system, but also reduce the cost of the system equipments accompanying too.

In addition, since the present invention adopts the separation of the encoding operation and the decoding operation. Thus, a broadcast weighting is able to be included in the computing operation dynamically with respect to each of the video data streams. Therefore, when the video data stream is broadcasted, some relevant individual video data stream can be broadcasted in the manner of carrying on the weighting, to make it more conspicuous and thus to enhance the videoconference result.

The present invention further provides a multi-unit video data stream control system, suitable for a plurality of units join a conference. Wherein, each unit outputs an individual video data stream respectively. The video data stream control system comprises a video decoding unit and a video encoding unit. Wherein, the video decoding unit receives these individual video data streams, disassembles these individual video data streams to an individual audio signal and an individual video signal, and then mixes the disassembled audio signal and the disassembled video signal respectively into an audio mixed data stream and a video mixed data stream. The video encoding unit receives the audio mixed data stream and the video mixed data stream, encodes the audio mixed data stream and the video mixed data stream to a video mixed data stream, and then sends the video mixed data stream to the participant units to broadcast.

The video decoding unit and the video encoding unit mentioned above can be accomplished by two video process chip units. When anyone of the two video process chip units has been selected dynamically as a video decoding chip, the other one will be a video encoding unit.

The present invention further provides a multi-input video data stream control method. The method comprises: providing a video decoding unit and a video encoding unit; inputting a plurality of video data streams to the video decoding unit; processing a decoding operation, the operation is executed by the video decoding unit, each of the video data streams is disassembled into an audio signal and a video signal, the disassembled audio signals and the disassembled video signals then are mixed to generate an audio mixed data stream and a video mixed data stream; processing a encoding operation, the encoding operation is executed by the video encoding unit, merging the audio mixed data stream and the video mixed data stream into a video mixed data stream for broadcasting.

### BRIEF DESCRIPTION OF THE DRAWINGS

The accompanying drawings are included to provide a further understanding of the invention, and are incorporated in and constitute a part of this specification. The drawings illustrate embodiments of the invention, and together with the description, serve to explain the principles of the invention. In the drawings,

FIG. 1 schematically shows a simple operation of a videoconference;

FIG. 2 schematically shows a block diagram of a videoconference system; and

FIG. 3 schematically shows a block diagram of a videoconference system according to the present invention.

### DESCRIPTION OF THE PREFERRED EMBODIMENTS

One of the major characteristics of the present invention is using the separate and independent video decoding unit and video encoding unit. Thus, the complexity of the process chip is reduced. Therefore, the manufacture cost is reduced, and different broadcast weighting can be applied to each broadcast window.

An embodiment is exemplifying below to describe the characteristic of the present invention. The present invention adopts a video data transmission protocol to transmit the video signal on the network for a videoconference. The video data transmission protocol that complies with the communication standard includes, for example, H.320, H.321, H.323 and H.324, ...,etc. The video data transmission protocol also has the functions to adapt the network type, the video standard, the audio standard, the multi-tasking control, the safety protocol, the control protocol, and the modem, ...,etc, to fulfill all the function requirements of the videoconference protocol. The present invention, via the hardware change and under the transmission protocol, further creates other functions to increase the efficiency of the transmission protocol.

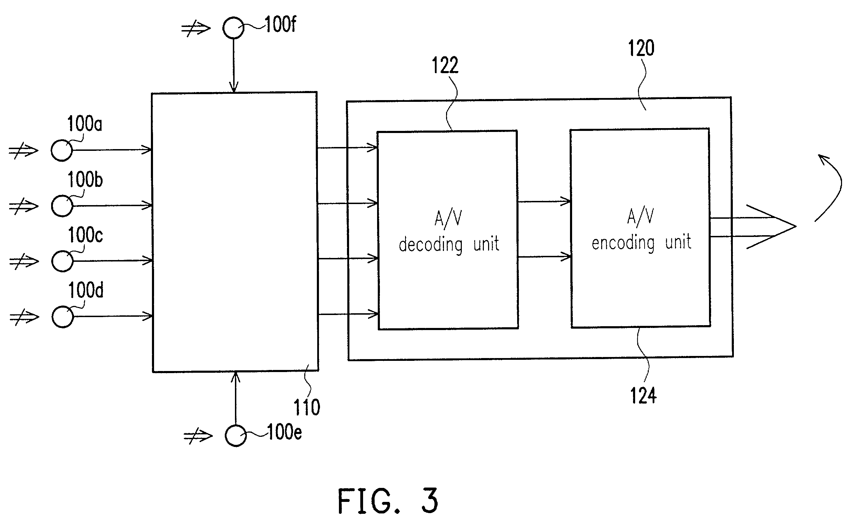

FIG. 3 schematically shows a block diagram of a videoconference system according to the present invention except the software protocols and the interface standards. In FIG. 3, each participant of the conference is equipped with a video broadcast unit, such as 100a, 100b, ..., or 100f and a video catch unit 104 that adapts with the video broadcast unit (as shown in FIG. 1). The video broadcast units are also generally called as the participant units 100a-100f, and are used by the conference participants. The individual video data streams generated by the participant units 100a-100f are all input into a data stream control center 110 through the input path, the input path is such as the local area network.

The data stream control center 110 is generally controlled by the chairman of the conference. Based on the limitation of the system display capability, the individual video data stream of part of the all participants can be dynamically selected to broadcast to each participant. Whereas, the video of all participants can also be broadcasted simultaneously. Furthermore, the data stream control center 110 can also equip the voice recognition capability to automatically recognize the participant who is speaking, and selects the broadcast automatically. As shown in FIG. 3, for example, there are four participants that are selected to broadcast currently. The individual video data stream of the selected participant is input into the multi-point control unit 120, to process the video decoding and encoding operation. The individual video data stream is mixed to generate a mixed video data stream according to the communication protocol. The mixed video data stream, after it is output, is sent to each participant unit 100a-100f via the network to broadcast.

It is because the workload of the traditional video process unit is too heavy, that results in the inefficiency and the expensive cost of the equipments. The present invention provides the method to process the decoding operation and encoding operation by using two process chip units in multi-point control unit 120 respectively.

In multi-point control unit 120, at first, the selected individual video data steam is input into an audio/video (A/V) decoding unit 122, that is also known as the video decoding unit 122. The video decoding unit 122 decodes the individual video data stream into an individual audio signal and an individual video signal. These individual audio signals are mixed into a mixed audio data stream, and those individual video signals are also mixed into a mixed video data stream. In the process of the mixture, depending on the physical case requirements, each corresponding individual audio signal or video signal can be applied with different individual broadcast index or broadcast weighting. For example, having the current speaker with a bigger broadcast weighting is to protrude the ratio and the result of the current speaker in the broadcast screen. Since the video decoding unit 122 is not doing the encoding operation, the design and the manufacture of the process chip is much easier. Because the computing workload of the video decoding unit 122 is not very heavy, thus, the process chip is not designed to use the expensive high-speed chip. The adjustment of the broadcast weighting is not necessary processed by the video decoding unit 122, and may be processed by the further process unit.

The mixed audio data stream and mixed video data stream that are output from the video decoding unit 122 after the decoding and mix operation are sent to a video encoding unit 124. The video encoding unit 124 further mixes the mixed audio data stream and the mixed video data stream into a mixed video data stream according to the protocol.
Afterwards, the mixed video data stream is output to each participant unit for broadcasting.

Since the video encoding unit 124 only processes the encoding operation, and does not have very heavy workload. Relatively, it is not necessary to use the expensive high-speed chip. In addition, if the broadcast weighting setting is not processed by the video decoding unit 122, the broadcast weighting setting should be processed by the video encoding unit 124. It depends on the current workload level of the video decoding unit 122 and the video encoding unit 124.

In addition, the video decoding unit and the video decoding unit mentioned above are accomplished by two video process chip units. When any one of these two video process chip units is dynamically selected as a video decoding unit, the other one is chosen as a video encoding unit. In other word, any one of these two video process chip units can be dynamically selected to process the video decoding, and the other one to process the video encoding according to the current computing workload and the role can be changed accordingly.

According to the characteristic of the present invention, as a physical example, such as the video having the NTSC 60Hz specification, the single full screen output is 30Hz, the maximum delay of this system (without considering the decoding encoding delay and the network delay) is about 1/30 second. In addition, using the PAL 50Hz as an example, the delay is only about 1/25 second by using two chip units to process the decoding and encoding operation. Using two chips to process the computing workload and thus obtaining the optimum price performance ratio is one of the major characteristics of the present invention.

Therefore, the present invention at least has following characteristics and advantages:
1. The decoding and encoding operation are processed by different process chip, thus to reduce the workload of the chip and the cost of the equipments.
2. The present invention assigns the broadcast weighting to the participant unit that is selected to broadcast, thus to protrude the video of the speaker that is corresponding to some windows.
3. The hardware design according to the present invention having the decoding and encoding operation to be processed by different process chips, and in addition, to create the function that cannot be achieved by the traditional H.323 protocol.
4. The conference system according to the present invention is able to process the multiple users videoconference through the local area network transmission, without the limitation of the space.
5. The present invention equips the function to recognize the current speaker automatically, and is also capable to select the broadcast automatically.
6. The conference system according to the present invention is able to select multiple participant units to broadcast without the traditional limitation that can only select four persons at the same time. It is because the decoding and encoding operation are processed by different chip respectively, thus the computing capability is increased.

Although the invention has been described with reference to a particular embodiment thereof, it will be apparent to one of the ordinary skill in the art that modifications to the described embodiment may be made without departing from the spirit of the invention. Accordingly, the scope of the invention will be defined by the attached claims not by the above detailed description.

## Claims

1. A videoconference system, the system suitable for a plurality of participant units joining a conference, wherein each of the participant units outputs an individual video data stream, the videoconference system comprising:
a central control unit, wherein the central control unit receives the individual video data streams and is able to selectively output the whole video data streams or part of the whole video data streams;
a video decoding unit, wherein the video decoding unit receives the individual video data streams that are chosen, disassembles the individual video data streams into an individual audio signal and an individual video signal respectively, and then mixes the disassembled audio signal and the disassembled video signal into an audio mixed data stream and a video mixed data stream respectively; and
a video encoding unit, wherein the video encoding unit receives the audio mixed data stream and the video mixed data stream, encodes the audio mixed data stream and the video mixed data stream to a video mixed data stream, and then sends the video mixed data stream to the participant units for broadcasting.

2. The videoconference system of claim 1, wherein the central control unit selectively outputs four of the individual video data streams.

3. The videoconference system of claim 1, wherein the videoconference system comprises a protocol structure that adapts with a H.323 protocol, to control and transmit the video data streams.

4. The videoconference system of claim 1, wherein the videoconference system comprises one of the three protocol structures that adapts with the protocol among the H.320, H.321 and H.324 protocol.

5. The videoconference system of claim 1, wherein the videoconference system comprises a video data stream transmission control protocol.

6. The videoconference system of claim 1, wherein the video decoding unit and the video encoding unit are two separate and independent units to process the decoding and encoding operation respectively.

7. The videoconference system of claim 1, wherein the central control unit is controlled by a chairman of the conference.

8. The videoconference system of claim 1, wherein the participant units join the conference through a local area network (LAN).

9. The videoconference system of claim 1, wherein a broadcast weighting of the participant units that are chosen is processed by either the video decoding unit or the video encoding unit, but the operation is not fix to be processed by either one.

10. A multi-unit video data stream control system, which is suitable for a videoconference system for a plurality of participant units to join a conference, wherein each of the units outputs an individual video stream respectively, the video data stream control system comprising:
a first video process chip unit; and
a second video process chip unit, wherein when either the first video process chip unit or the second video process chip unit is dynamically selected as a video decoding unit, the other one is chosen as a video encoding unit, wherein
the video decoding unit receives the individual video data streams that are chosen, disassembles the individual video data streams into an individual audio signal and an individual video signal respectively, and then mixes the disassembled audio signal and the disassembled video signal into an audio mixed data stream and a video mixed data stream respectively; and
the video encoding unit receives the audio mixed data stream and the video mixed data stream, encodes the audio mixed data stream and the video mixed data stream to a video mixed data stream, and then sends the video mixed data stream to the units for broadcasting.

11. A multi-unit video data stream control system, which is suitable for a videoconference system for a plurality of participant units to join a conference, wherein each of the units outputs an individual video stream respectively, the video data stream control system comprising:
a video decoding unit, wherein the video decoding unit receives the individual video data streams, disassembles the individual video data streams into an individual audio signal and an individual video signal respectively, and then mixes the disassembled audio signal and the disassembled video signal into an audio mixed data stream and a video mixed data stream respectively; and
a video encoding unit, wherein the video encoding unit receives the audio mixed data stream and the video mixed data stream, encodes the audio mixed data stream and the video mixed data stream to a video mixed data stream, and then sends the video mixed data stream to the units for broadcasting.

12. The multi-unit video data stream control system of claim 11, comprising a protocol structure that adapts with the H.323 protocol, to control and transmit the video data streams.

13. The multi-unit video data stream control system of claim 11, comprising adopting one of the three basic protocol structures among the H.320, H.321 and H.324 protocol.

14. The multi-unit video data stream control system of claim 11, comprising a video data stream transmission control protocol.

15. The multi-unit video data stream control system of claim 11, wherein the video decoding unit and the video encoding unit are two separate and independent units to process the decoding and encoding operation respectively.

16. The multi-unit video data stream control system of claim 11, wherein a broadcast weighting of the units is processed by either the video decoding unit or the video encoding unit, but the operation is not fix to be processed by either one.

17. A multi-input video data stream control method, the method comprising:
providing a video decoding unit and a video decoding unit;
inputting a plurality of video data streams to the video decoding unit;
processing a decoding operation, wherein the decoding operation is processed by the video decoding unit, disassembling each of the video data streams into an audio signal and a video signal, and mixed the disassembled audio signals and the disassembled video signals to an audio mixed data stream and a video mixed data stream; and
processing an encoding operation, wherein the encoding operation is processed by the video encoding unit, merging the audio mixed data stream and the video mixed data stream into a video mixed data stream for broadcasting.

18. The multi-input video data stream control method of claim 17, wherein in the step of processing the decoding operation, the method further comprises providing an individual broadcast weighting to the video data streams.

19. The multi-input video data stream control method of claim 17, wherein in the step of processing the encoding operation, further comprises providing an individual broadcast weighting to the video data streams.
